# EUROPEAN PATENT SPECIFICATION

(11) **EP 4 464 951 B1**
(45) Date of publication and mention of the grant of the patent: **17.06.2026**
(21) Application number: 24174119.8
(22) Date of filing: 03.05.2024
(51) Int. Cl.: F24S 10/40, F24S 10/70, F24S 60/00, F24S 80/54, F24S 20/40, F24S 23/70, F24S 70/12, F24S 70/20, F24S 10/75, F24S 20/00

(54) **MODULE OF A SOLAR COLLECTOR**
MODUL EINES SOLARKOLLEKTORS
MODULE D'UN CAPTEUR SOLAIRE

(30) Priority: 15.05.2023 IT 202300009765
(43) Date of publication of application: 20.11.2024
(73) Proprietor: Spinazza, Roberto, 37057 San Giovanni Lupatoto (Verona) (IT)
(72) Inventor: Spinazza, Roberto, 37057 San Giovanni Lupatoto (Verona) (IT)
(74) Representative: Anselmi, Davide

(56) References cited:
- WO-A1-2009/148344
- WO-A1-2017/002127
- CN-A- 102 338 484
- CN-Y- 201 327 216
- DE-A1- 102010 036 393
- JP-A- 2014 159 892
- US-A1- 2010 319 681
- US-A1- 2020 300 230

## Description

### Technical field

The present invention relates to a module of a solar collector.

In particular, the invention relates to a module capable of collecting the energy contained in solar radiation and converting it into heat. In particular, the aforesaid module can be installed on the roofs of houses, offices, factories or any other type of building to produce hot water, for example.

The invention also relates to a solar collector comprising at least one module mentioned above.

### Prior art

A solar collector of known type comprises a plurality of conduits for the circulation of a vector fluid. During the operation of the solar collector, such conduits face the sky so that they can absorb solar radiation. Preferably each conduit is under vacuum. The solar radiation hits the conduit and heats it. As the conduit heats up, it transmits heat by conduction to the aforementioned vector fluid. Such vector fluid can then be introduced into a heat exchanger, so that the water accumulated inside a boiler can be heated.

As is known, the solar radiation hitting the surface of a collector can vary depending on the season, time of day or weather conditions. As a result, situations may arise in which the conduits, and consequently the vector fluid circulating therein, absorb an excessive quantity of heat. In this case, the water temperature can rise excessively, even above the boiling point. In the prior art, this drawback is solved by blocking the circulation of the vector fluid inside the conduits so as to prevent further heat exchange with the water accumulated in the boiler. That is, when the water temperature exceeds a predefined level, the circulation of the vector fluid inside the conduits is blocked, preventing further increases in water temperature.

In fact, the accumulation of water in the boiler can lead to the formation of bacteria, such as legionella, which are potentially dangerous for the end user.

However, this prior art has other drawbacks. In fact, when the circulation of the vector fluid is blocked, the temperature of the vector fluid in the conduits which remain exposed to the sun continues to rise rapidly and can therefore exceed a critical value beyond which the chemical and physical characteristics of the vector fluid are altered.

As a result, there is a degradation in the performance of the plant over time.

In addition, in the presence of low temperatures outside the solar collector and/or in the event of low light radiation, the heat energy generated by the known solar collectors is almost totally dispersed by the hydraulic circuits of the vector fluid and their connection with the hydraulic circuits of external networks and associated therewith.

Document WO 2017/002127 A1 discloses a module of a solar collector according to the preamble of claim 1.

### Summary

In this context, the technical task underlying the present invention is to propose a module of a solar collector which obviates the drawbacks in the known art as described above.

In particular, an object of the present invention is to provide a module of a solar collector capable of maximising the exploitation of the solar energy collected and converted into heat energy.

Another object of the present invention is to provide a solar collector module in which the heat energy dispersion phenomena produced is minimised. Therefore, specifically, the invention sets the object of providing a module of a solar collector in which the entire heat energy generated following the conversion of solar energy is exploited for heating a vector fluid.

A further object of the present invention is to provide a module of a solar collector which is not subject to operational interruptions caused by an excessive heating of the vector fluid circulating therein and, moreover, capable of supplying, essentially instantaneously, a predetermined quantity of hot domestic water without having to accumulate it in specific boilers or tanks.

The stated technical task and specified objects are substantially achieved by a module of a solar collector, which comprises the technical features disclosed in the independent claim. The dependent claims correspond to further advantageous aspects of the invention.

It should be appreciated that this summary introduces a selection of concepts in simplified form, which will be further elaborated on in the detailed description provided below.

The invention relates to a module of a solar collector.

In particular, such a module comprises a container shaped to enclose a primary volume of the module and having a vacuum gap. The container is made with a material that is transparent to at least one light radiation so as to permit the propagation thereof from a source outside the module into the primary volume.

The module further comprises one or more conduits for conveying, for example, one or more vector fluids, each of which is arranged in the primary volume and, moreover, comprising an outward stretch and a return stretch. In the outward stretch the vector fluid has a first temperature value, while in the return stretch the vector fluid has a second temperature value that is greater than the first value.

In addition, the module a comprises heat energy accumulating material interposed between the conduit and the container and, moreover, and configured at least to absorb and accumulate a set quantity of heat energy arising from the light radiation.

In particular, the module comprises a light radiation absorbing element interposed between the heat energy accumulating material and the container to absorb at least part of the light radiation and, moreover, reduce a possible dispersion due to at least to the refraction phenomenon. In addition, the light radiation absorbing element is configured to convert at least part of the light radiation absorbed into a storable quantity of heat energy.

In particular, the heat energy accumulating material is configured to absorb and accumulate the aforesaid quantity of heat energy deriving from the light radiation and, then, to transfer it to the conduit of the vector fluid.

Thus, advantageously, the aforesaid module is capable of maximising the absorption of light radiation thanks to the absorbing element and, at the same time, minimising the dispersion effects of the same light radiation (again thanks to the absorbing element) and the dispersion effects of the heat energy resulting from the light radiation thanks to the heat energy accumulating material. In fact, the latter is advantageously configured to retain the heat produced by the (natural and/or artificial) conversion of light radiation into heat and, therefore, to convey it towards the conduit in order to obtain the heating of the vector liquid flowing therein.

Even more advantageously, the vacuum gap of the container allows the heat energy developed during the module's operation to be stored and conveyed inside the primary volume, avoiding any disadvantageous dispersion to the outside of the module itself. **In** particular, the aforesaid module of a solar collector can be exploited on several occasions as a function of the vector fluid circulated inside the conduit.

For example, the module can be used as a heat accumulator (through the heat energy accumulating material) for heating the vector fluid, which is only conveyed through the conduit at a later stage. **That** is, the conduit is initially kept empty while the heat energy accumulating material stores the heat generated by the light radiation hitting the module. Subsequently, the vector fluid is made to flow through the conduit for its instantaneous heating and, for example, without the need to accumulate water.

**If** the vector fluid conveyed along the conduit (either immediately or at a later stage) is glycol, this can be used as a useful heat exchanger for heating the mains water of a house or the water of a boiler so as to generate an accumulation of hot water for later use. Otherwise, the vector fluid could be the mains water itself, which, consequently, would be directly usable without having to implement indirect heat exchanges (and, therefore, dispersions) with other means.

Even more advantageously, the module in accordance with the invention is also capable of operating in the absence of light radiation coming from the external source. More precisely, if there is no light radiation interacting with the module, the latter is capable of acting as an accumulator of heat energy produced by appropriately connected external devices, such as a wood-burning stove, a gas boiler, or by means of electric resistances. **In** addition or alternatively, again in the absence of interaction with an external light radiation, the module is also capable of acting as a heat energy accumulator which can be gradually released to the outside, e.g., for heating domestic water.

### Brief description of the drawings

Further features and advantages of the present invention will more fully emerge from the non-limiting description of a preferred but not exclusive embodiment of a module of a solar collector, as illustrated in the accompanying drawings, in which:
- figure 1 illustrates, according to a schematic view, a longitudinal section of a first embodiment of a module of a solar collector;
- figure 2 illustrates, according to a schematic view, an enlargement of the box "A" illustrated in figure 1;
- figure 3 illustrates, according to a schematic view, a cross-section of the first embodiment of the module illustrated in figure 1;
- figure 4 illustrates, according to a schematic view, a longitudinal section of a second embodiment of a module of a solar collector;
- figure 5 illustrates, according to a schematic view, an enlargement of the box "B" illustrated in figure 4;
- figure 6 illustrates, according to a schematic view, a cross-section of the second embodiment of the module illustrated in figure 4;
- figure 7 illustrates, according to a schematic view, a further aspect of a module of a solar collector;
- figure 8 illustrates, according to a schematic view, a possible plant comprising a plurality of modules of a solar collector.

With reference to the drawings, they serve solely to illustrate embodiments of the invention with the aim of better clarifying, in combination with the description, the inventive principles on which the invention is based.

### Detailed description of at least one embodiment

The present invention relates to a module of a solar collector which, with reference to the figures, has been generally indicated by the number 1.

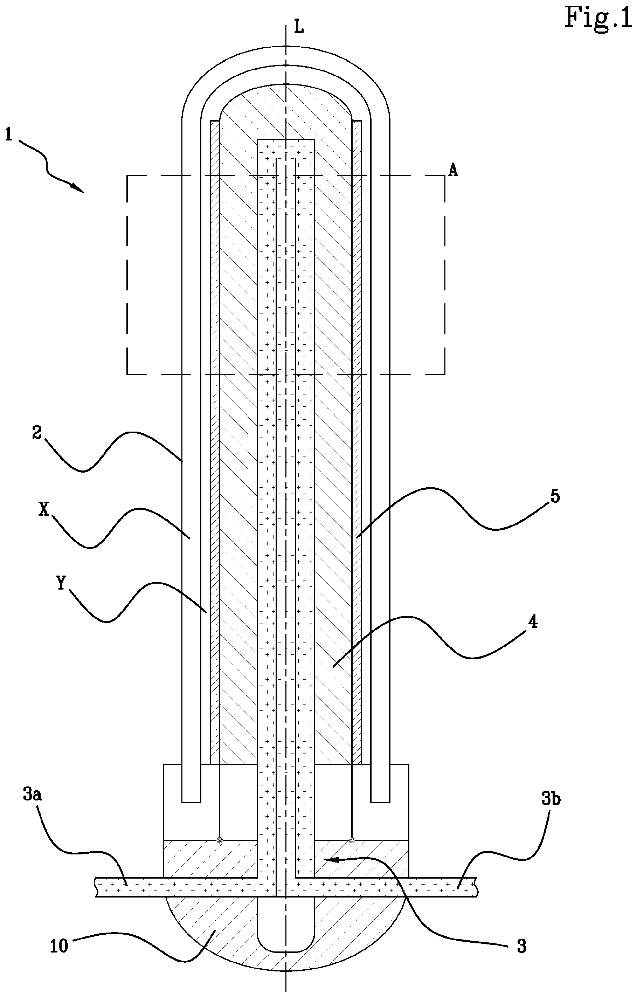

Figures 1, 4 and 7 show a module 1 of a solar collector comprising a container 2 extending over a predefined length along a longitudinal axis L thereof. The container 2 is provided with a vacuum gap X and, moreover, is shaped to enclose a primary volume of the same module 1. In addition, the container 2 is made with a material that is transparent to at least one light radiation so as to permit propagation thereof from a source outside the module to the interior of the primary volume.

The module 1 also comprises a conduit 3 for conveying a vector fluid arranged inside the primary volume and comprising an outward stretch 3a, in which said vector fluid has a first temperature value, and a return stretch 3b, in which said vector fluid has a second temperature value that is greater than the first value.

The module 1 also comprises a heat energy accumulating material 4 preferably interposed between the conduit 3 and the container 2, configured at least to accumulate a set quantity of heat energy arising from the light radiation.

In addition, the module 1 comprises a light radiation absorbing element interposed between the heat energy accumulating material 4 and the container 2. Such a light radiation accumulating element is configured to absorb the light radiation and, moreover, to reduce a possible dispersion due at least to the refraction phenomenon. In addition, the light radiation absorbing element is configured to convert at least part of the light radiation absorbed into a quantity of heat energy.

In particular, the heat energy accumulating material 4 is configured to absorb and accumulate the aforesaid quantity of heat energy deriving from the light radiation and, then, to transfer it to the conduit 3 of the fluid vector.

Thus, advantageously, the aforesaid module is capable of maximising the absorption of light radiation thanks to the absorbing element and, at the same time, minimising the dispersion effects of the same light radiation (again thanks to the absorbing element) and the dispersion effects of the heat energy resulting from the light radiation thanks to the heat energy accumulating material. In fact, the latter is advantageously configured to retain the heat produced by the (natural and/or artificial) conversion of light radiation into heat and, therefore, to convey it towards the conduit in order to obtain the heating of the vector liquid flowing therein.

In fact, the vacuum gap X is advantageously capable of acting as an insulating layer adapted to retain the quantity of heat energy deriving from the light radiation absorbing element inside the primary volume. Consequently, the heat generated will tend to propagate towards a central portion of the primary volume, through the heat energy accumulating material 4, in which the conduit 3 in which the vector fluid flows is advantageously positioned. The latter will tend to absorb the heat transmitted through the heat energy accumulating material 4, raising its own temperature from a first value to a second value greater than the first so that it can be used as a means of indirect heat exchange for heating, for example, a quantity of domestic water or for heating a house.

Advantageously, moreover, the provision of a heat energy accumulating material 4 also acts as an accumulating element of the excess heat energy which, normally, in the solar collectors known in the state of the art, radiate the vector fluid, quickly and excessively raising the temperature thereof and thus bringing the solar collector itself to a blocked condition.

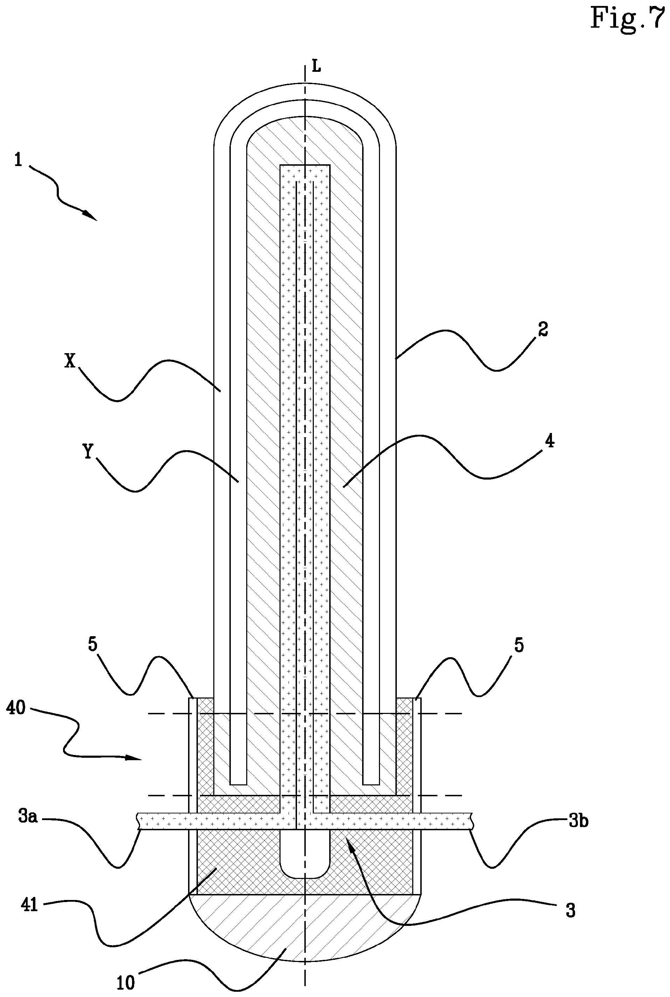

In accordance with the invention illustrated in figure 7, the heat energy accumulating material 4 extends along the longitudinal axis L over a length greater than that of the container 2 so as to define a protruding portion 40 outside the primary volume (substantially comprised between the two parallel dotted lines shown in figure 7). In particular, the protruding portion 40 is delimited by a heat insulating casing 41 in which the outward stretch 3a and the return stretch 3b of the conduit 3 are also immersed, at least in part.

Preferably, the protruding portion 40 consists of a portion of heat energy accumulating material 4 extending - relative to the longitudinal axis L, at least beyond the vacuum gap X, if not also beyond the air gap Y.

Even more preferably, as can be seen in figure 7, the protruding portion 40 occupies the entire free space in which it is arranged, e.g., the space between the conduit 3 and the walls of the container 2, part of the air space Y, so as to define a condenser component in which the latent heat deriving from the liquid/gas and gas/liquid phase change of the fluid circulating in the conduit 3 can be accumulated (as further described below).

Thereby, the protruding portion 40 enclosed inside the heat insulating casing 41 is advantageously configured to act as a heat condenser element with which module 1 is capable of increasing the heat accumulation capacity thereof.

In particular, the protruding portion 40 is advantageously capable of absorbing the latent heat produced during the vaporisation of the vector fluid caused by the continuous increase of the temperature inside the primary volume (the temperature increase is mainly caused by the accumulation of heat due to the heat energy accumulating material 4 and/or, as explained below, by the possible presence of electric resistances).

Therefore, the protruding portion 40 is advantageously capable of inducing the condensation of the vaporised carrier liquid so as to prevent it from entering the hydraulic circuit connected to the module 1 and, moreover, so as to recover the latent heat of the same vaporised vector liquid.

**In** accordance with a preferred aspect of the invention, the heat insulating casing 41 is made of polyurethane foam or rock wool, preferably covered with a protective and containment metal and/or plastic coating, so as to provide an insulation of the protruding portion 40 with respect to the external environment.

Preferably, as can be seen in figure 7, the heat insulating casing 41 extends along the longitudinal axis L so that it also overlaps at least part of the outer surface of the container 2.

Even more preferably, an inner wall of the container 2 extends inside the protruding portion 40 so as to provide a containment wall for the heat energy accumulating material 4 which, as explained below, could be of granular type.

Preferably, the module 1 further comprises a hermetic closing element 10 to be positioned at an opening of the container 2.

According to an aspect of the invention, the hermetic closing element 10 is interposed between the container 2 and the protruding portion 40.

According to an alternative aspect of the invention, the heat insulating casing 41 is interposed between the container 2 and the hermetic closing element 10.

Even more preferably, the container 2 has a single opening useful for the insertion of at least the previously listed components into the primary volume, i.e., the conduit 3, the heat energy accumulating material 4 and the light radiation absorbing element (if present, moreover, the photovoltaic cells 5). Advantageously, the container 2 comprises a single opening so that the primary volume can be easily isolated from the external environment so as to avoid, for example, possible dispersions, soiling and damage to the previously listed components arranged internally.

Preferably, the light radiation absorbing element is made with a dark and/or opaque material to maximise the light radiation absorption.

Even more preferably, the light radiation absorbing element is shaped like a sheet or plate arranged in contact with the inner surface of the container 2, substantially facing the gap X.

For example, the light radiation absorbing element can be made as a plate of metal material (copper or aluminium) coated with a selective dark-coloured paint in the absorption of light radiation.

Figures 1-3 show a first embodiment of a module 1 of a solar collector in which the light radiation absorbing element comprises photovoltaic cells 5, preferably interposed between the heat energy accumulating material 4 and the container 2, facing the container 2 to perform an operating step thereof of conversion of the light radiation into a quantity of electric energy. In particular, the heat energy accumulating material 4 is configured to absorb a quantity of heat energy produced by the photovoltaic cells 5 during the aforesaid operating step and, moreover, to transfer such a quantity of heat energy to the conduit 3.

Therefore, the module 1 described above is advantageously capable of producing both electric and heat energy by means of the conversion of a light radiation, preferably a solar radiation, which radiates the photovoltaic cells 5 arranged inside the container 2. In other words, the module 1 is capable of producing both a quantity of electric energy by means of the conversion of light radiation by the photovoltaic cells 5, and of producing heat energy usable to heat the vector fluid (which in turn can be used in a heat exchanger for heating the mains water of a building - as explained below) by means of the absorption by the heat energy accumulating material 4 normally produced by the photovoltaic cells 5 during their radiation and, therefore, the subsequent transfer of the same absorbed heat energy to the conduit 3 in which the vector fluid flows.

The photovoltaic cells 5 are configured to convert the solar energy into electric energy, which, by means of appropriate electrical connections, is conveyed externally to the module 1 to be immediately exploited by possible connectable electrical or electronic devices or to be stored in special storage devices. Alternatively, the electric energy produced by the photovoltaic cells 5 can be conveyed to further devices constituting module 1 and better described below. During the operating step of converting solar energy into electric energy, the photovoltaic cells 5 also produce heat energy, which is advantageously absorbed by the heat energy accumulating material 4, preferably arranged in direct contact with the photovoltaic cells 5. Even more advantageously, being interposed between the photovoltaic cells 5 and the conduit 3, the heat energy accumulating material 4 is also configured to radiate to the conduit 3 the previously accumulated heat.

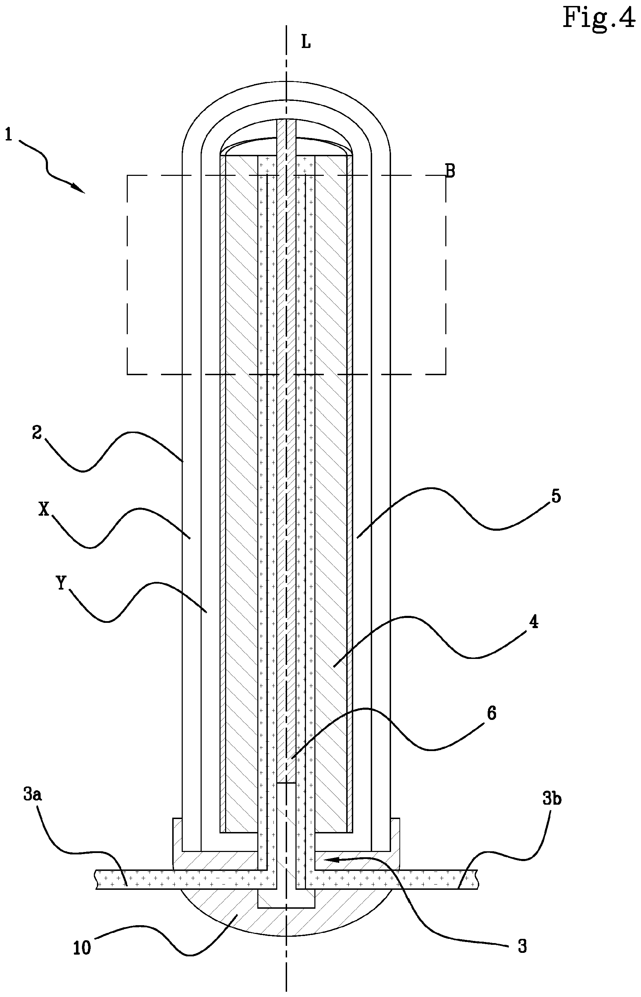

Figures 4-6 show a second embodiment of a module 1 of a solar collector.

In particular, the second embodiment of the module 1 of a solar collector comprises an electric resistance 6 arranged inside the primary volume of the module 1 opposite the heat energy accumulating material 4 relative to the conduit 3. In particular, the electric resistance 6 is connected to the photovoltaic cells 5 to receive at least part of the electric energy obtained during their operating step so as to heat the vector fluid contained in the conduit 3.

That is, the module 1 is advantageously provided with an electric resistance 6 arranged inside in the primary volume and, moreover, configured to radiate a quantity of heat directly to the conduit 3 so as to raise the temperature of the vector fluid.

Therefore, the conduit 3 is simultaneously radiated from two opposite directions: in fact, the heat energy accumulating material 4 continues to absorb the heat produced during the operating step of the photovoltaic cells 5 to radiate it inside the primary volume, while the electric resistance 6 radiates heat in the opposite direction (essentially outwards, as it is arranged opposite relative to the conduit 3) to accelerate the rise in temperature of the vector fluid.

Thereby, the vector fluid is heated by exploiting all the heat energy produced, directly or indirectly, by the photovoltaic cells. That is, the module 1 is capable of minimising the dispersion of the produced heat useful for heating the vector fluid by exploiting both the electric energy (obtained as a product) and the heat energy (obtained as "waste") by the photovoltaic cells 5.

Alternatively, the electric resistance 6 can be powered by an electrical source complementary to or substituting the aforesaid photovoltaic cells 5, arranged outside the module 1.

Preferably, the electric resistance 6 is arranged substantially coaxial to the container 2 and thus substantially along the longitudinal axis L.

Even more preferably, the electric resistance extends only over a part of the length of the inner module 1. In particular, the electric resistance 6 is substantially confined within the footprint defined by the protruding portion 40.

Figure 7 illustrates a further aspect of the invention related to the photovoltaic cells 5.

According to such an aspect, in fact, the module 1 comprises photovoltaic cells 5 arranged outside the heat insulating casing 41 and, preferably, in contact therewith or, if present, with the outer metal and/or plastic coating. In addition, the photovoltaic cells 5 face the external source to perform an operating step thereof of converting light radiation into a quantity of electric energy.

Preferably, the photovoltaic cells are then connected to the electric resistance 6 arranged inside the primary volume of the module 1.

In accordance with an aspect of the invention, the outward stretch 3a of the conduit 3 is arranged in contact with the heat energy accumulating material 4. In particular, the heat energy accumulating material 4 is configured to convey the quantity of heat energy (obtained from the photovoltaic cells 5) to the outward stretch 3a to raise the temperature of the vector fluid from the first temperature value to the second temperature value.

That is, the heat energy accumulating material 4 is arranged in direct contact with the outward stretch 3a of the conduit so as to raise the temperature of the vector fluid having a first temperature value at the moment of its conveyance inside the module 1. In still other words, the heat energy accumulating material 4 provides the first quantity of heat useful for raising the temperature of the vector fluid.

In accordance with an alternative aspect of the invention, the return stretch 3b of the conduit 3 is arranged in contact with the heat energy accumulating material 4. In particular, the heat energy accumulating material 4 is configured to convey the quantity of heat energy to the return stretch 3b to raise the temperature of the vector fluid up to the second temperature value.

Preferably, the outward stretch 3a or the return stretch 3b of the conduit 3 is arranged facing the electric resistance 6 to absorb a quantity of heat radiated by the same electric resistance 6.

Even more preferably, as illustrated in figure 4, the second embodiment of the module 1 envisages that the outward stretch 3a is arranged in contact with the electric resistance 6, while the return stretch 3b is arranged in contact with the heat energy accumulating material 4.

In the case of the first embodiment of the module 1 (figures 1-3), the heat energy accumulating material 4 is the only useful source of heat for heating the vector fluid and, therefore, it is preferable to position the outward stretch 3a of the conduit 3 directly in contact with the aforesaid accumulating material 4.

In the case of the second embodiment of the module 1 (figures 4-6), the temperature rise of the vector fluid depends on two different sources: the heat energy accumulating material 4 and the electric resistance 6.

In this second embodiment, therefore, the outward stretch 3a of the conduit 3 can be positioned in direct contact with either the aforesaid accumulating material 4 or the electric resistance 6 (with the consequent arrangement of the return stretch 3b in contact with either the electric resistance 6 or with the aforesaid accumulating material 4, respectively.

That is, in the second embodiment of the module 1, both the aforesaid accumulating material 4 and the electric resistance 6 can act as the first heat source adapted to supply the first quantity of heat useful for raising the temperature of the vector fluid. According to a possible aspect of the invention, with reference to the second embodiment of the module 1, the flow conveying the vector fluid inside the conduit 3 can be reversed if necessary.

That is, in the second embodiment, the outward stretch 3a and the return stretch 3b can be reversed so that the outward stretch 3a is arranged in contact with the heat energy accumulating material 4, while the return stretch is arranged in contact with the electric resistance 6.

In accordance with another possible aspect of the invention, the electric resistance 6 comprises a regulating device (not illustrated) configured to vary the quantity of heat radiated by the same electric resistance 6 as a function of a temperature value of the vector fluid detected in the return stretch 3b of the conduit 3.

That is, the regulating device is configured to vary the quantity of electric current powering the electric resistance 6 so as to reduce the quantity of heat produced by the latter. The regulating device is normally configured so that all the electric energy produced by the photovoltaic cells 5 is used by the electric resistance 6 for heat generation by the Joule effect. However, if the heat radiated by the heat energy accumulating material 4 is substantially sufficient to raise the temperature of the vector fluid up to a second predetermined value, the regulating device is advantageously configured to reduce the conveyance of electric energy to the electric resistance 6 so as to reduce the heat produced by the latter. The quantity of electric energy not used for the transformation into heat by the Joule effect is then advantageously conveyed into the grid or to an external distributing element so that it can be used for charging or the operation of other devices.

In accordance with an aspect of the invention, the heat energy accumulating material 4 is made as a single element either in granular form, or in lamellar form.

Using a heat energy accumulating material 4 as a single piece allows to make a more solid module 1 that can be easily assembled and disassembled in case of maintenance. Conversely, the use of a heat energy accumulating material 4 in granular or lamellar form allows to reduce the weight of the module 1 while still ensuring a good accumulation and radiation capacity of the heat produced by the photovoltaic cells 5.

In accordance with another aspect of the invention, the heat energy accumulating material 4 comprises an iron and carbon alloy.

Preferably, the heat energy accumulating material 4 is at least partly made of cast iron, and/or steel, and/or aluminium. Thereby, the use of at least one of such materials (or a combination thereof) allows to make a heat energy accumulating material 4 capable, on the one hand, of absorbing and accumulating the heat produced by the photovoltaic cells 5 and, on the other hand, of gradually radiating the aforesaid heat so as to progressively raise the temperature of the vector fluid present in the conduit 3.

Alternatively, the heat energy accumulating material 4 is made from any combination of metallic, ceramic, composite and polymeric materials.

Purely by way of example, in addition to the already mentioned cast iron, steel and aluminium, other materials that can be used include: bronze and brass among the metal materials, ceramics and stoneware among the ceramic materials, Teflon ("PTFE") among the polymeric materials, refractory cementitious materials and, among the composite materials, reinforced clay or concrete with, for example, metal shavings or metal reinforcement.

In accordance with a preferred aspect of the invention, the container 2 is a hollow tubular container extending along a longitudinal axis L thereof.

Preferably, the container 2, the conduit 3, the heat energy accumulating material 4 and the photovoltaic cells 5 extend concentrically and parallel to the longitudinal axis L.

Even more preferably, the entire module 1 has a hollow tubular shape with a cylindrical cross-section so that the components available inside the primary volume are concentric to form a module 1 with a multilayer structure. In this case, therefore, the heat propagation occurs along a radial direction orthogonal to the longitudinal axis **L,** from the outside to the inside of the primary volume.

Preferably, the outward stretch 3a and the return stretch 3b of the conduit 3 are arranged parallel to the longitudinal axis L and concentric to each other.

Even more preferably, the electric resistance 6 extends along the longitudinal axis L so as to be positioned centrally to the primary volume. Therefore, the conduit is arranged so as to surround the electric resistance 6, if present.

In accordance with an aspect of the invention, the photovoltaic cells have a substantially laminar shape and are arranged so as to form a cylindrical photovoltaic element extending along the longitudinal axis **L,** in which the outer surface is the photosensitive surface, while the inner surface has the electrical connections between the photovoltaic cells and encloses therein the heat energy accumulating material 4 for absorbing the heat produced during the operating step.

In accordance with another aspect of the invention, irrespective of whether made as a single piece, in granular or laminar form, the heat energy accumulating material 4 has a hollow tubular shape capable of being positioned between the aforesaid cylindrical photovoltaic element and the conduit 3. Thereby, the heat energy accumulating material 4 is capable of surrounding the conduit 3 with its inner surface and, consequently, the photovoltaic cells 5 are arranged around its outer surface.

Preferably, all the components described above are arranged in contact with each other so as to maximise the heat exchange. For example, considering by way of example only the second embodiment, the electric resistance 6 is in direct contact with the outward stretch 3a of the conduit 3, which in turn is in direct contact with the concentric return stretch 3b. The heat energy accumulating material 4 is interposed and in direct contact with the aforesaid return stretch 3b and with the photovoltaic cells 5. Possibly, the light radiation absorbing element or the photovoltaic cells 5 are arranged in contact with or integrated inside the container 2 and spaced apart from the heat energy accumulating material 4 so as to form an air gap Y useful for compensating the expansion of the aforesaid components as a function of the increase in their temperature during the use of the module 1. Conversely, the light radiation absorbing element or the photovoltaic cells 5 are arranged spaced apart from the container 2 so as to form an air gap Y useful for compensating the expansion of the aforesaid components as a function of the rise in their temperature during the use of the module 1.

In fact, the heat energy accumulating material 4, given its physical-chemical composition, is naturally inclined to expand as its internal temperature rises. Each material has a thermal expansion constant thereof and, therefore, for the same temperature difference (i.e., the difference between the initial and final temperature after heating), the final expansion will be proportional to the relative constant and possibly different between the various materials.

In accordance with an aspect of the invention, the module 1 further comprises a screen 7 arranged outside the container 2 and associated therewith. In particular, the screen 7 is arranged in a first operating position in which it is opposite a source of light radiation relative to the container 2 to reflect the light radiation inside the primary volume.

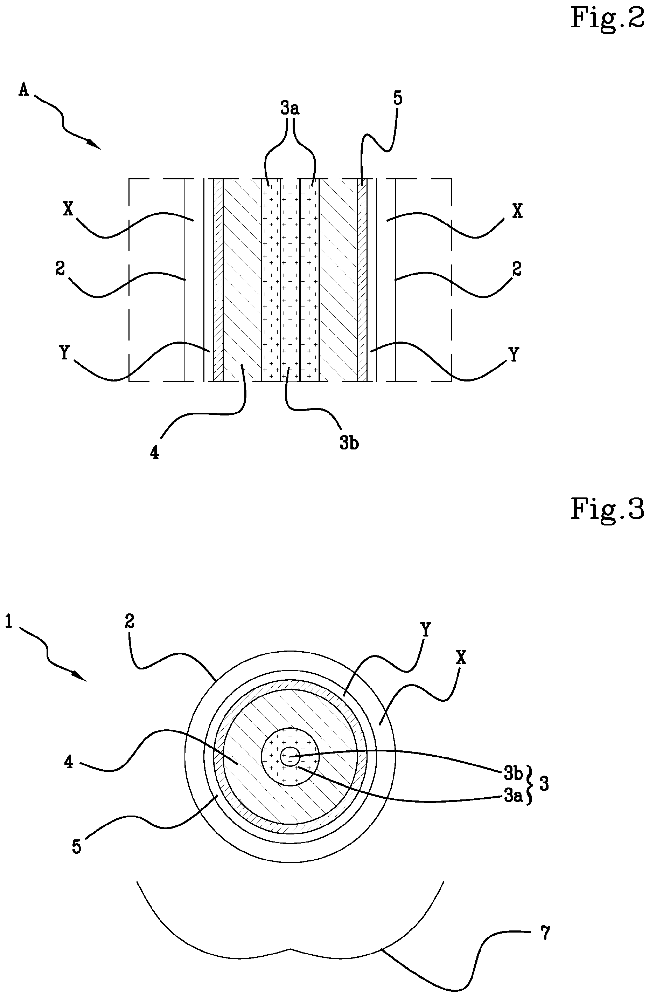

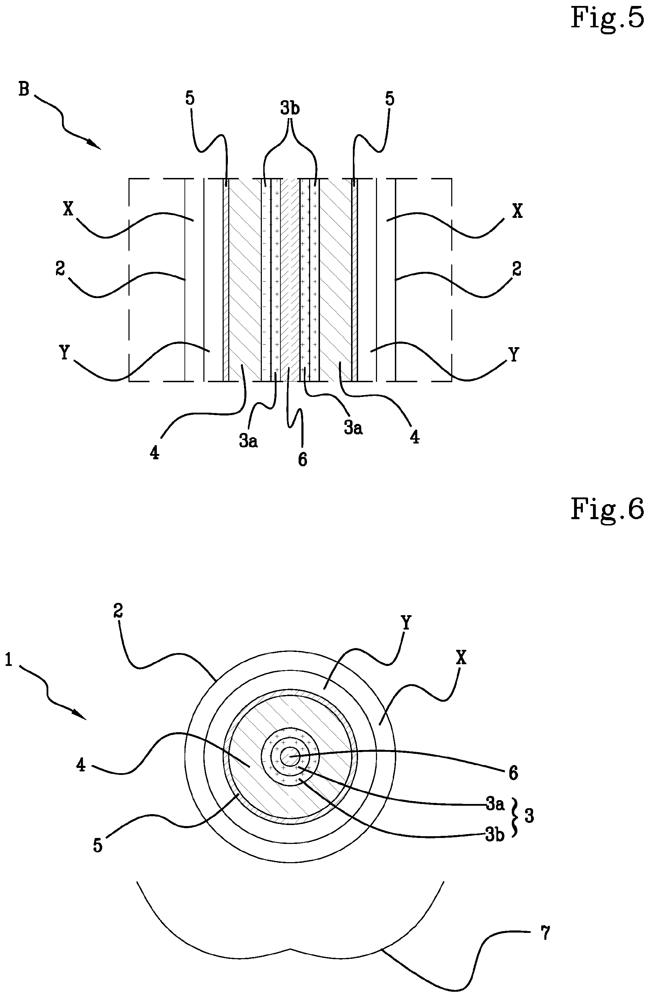

Thereby, the screen 7 is advantageously configured to reflect onto the container 2 that part of the light radiation which does not directly hit it. In fact, the container 2 can basically be divided into two portions: a first portion directly facing the source of light radiation, and a second portion opposite the first and, therefore, in shadow relative to the light source. The photovoltaic cells arranged at the aforesaid second portion would not be able to be illuminated by the light radiation if a reflective screen with a substantially parabolic or bi-parabolic shape, as illustrated in figure 3 and in figure 6, were not arranged. Advantageously, the parabolic or bi-parabolic shape of the screen 7, together with the use of a material reflecting the light radiation, allows to reflect the light radiation that does not directly hit the container 2 and direct it towards the second potion of the latter.

Preferably, the screen 7 is movable around the container 2 from the operating position at least to a covered position in which it is interposed between the container and the source of light radiation to block the propagation of at least the light radiation.

Advantageously, the movement of the screen 7 to the position of covering the first portion of the container (i.e., the portion facing the light source) allows to both block the interaction with the light radiation itself, and to protect the container 2 in the event of bad weather. For example, the screen 7 in the covered position allows to provide a protection against hail and, therefore, prevents the container 2 from breaking.

The invention further relates to a solar collector comprising one or more of the modules 1 described above.

Preferably, the solar collector comprises a support frame on which at least one of the aforesaid modules 1 can be coupled.

Even more preferably, the support frame can comprise one or more of the following advantageous features.

The support frame can comprise a movement means, e.g., wheels or other similar elements, useful for moving and/or orienting the solar collector as a function of the radiation emitted by the reference light source.

Therefore, for example, the solar collector can be moved and oriented in different positions in the garden and/or terrace as a function of the movement of the sun during the various hours of the day so as to keep the radiation of the photovoltaic cells 5 maximised.

The support frame can comprise electrical and/or water connection devices. Such connecting devices, for example, can comprise electrical connections which can be used to convey the electric energy produced by the photovoltaic cells 5 to external devices that require an electric power supply for their operation, e.g., electrical and/or electronic devices or maintenance batteries. Alternatively, or in addition, the connection devices can comprise connecting conduits which can be used to convey the heated vector fluid to an external recirculation system and/or a boiler so as to heat the mains water of a household for use immediately, or at a later stage.

The present invention further relates to a solar collector comprising a plurality of the modules 1 described above.

A solar collector comprises a plurality of modules 1 as described above, preferably a number varying between six and ten modules 1, which are independent of each other or can be connected in series or parallel with each other.

A solar collector of this type can advantageously be positioned on the roof of a house so that it is radiated as much as possible by solar radiation to be converted into electric and heat energy for heating the vector fluid and, therefore, for the subsequent heating of the mains water of the house itself.

The present invention also relates to an installation method of a solar collector.

In particular, the aforesaid installation method comprises the following steps:
- providing at least one module 1 having one or more of the features described previously;
- installing such a module 1 on a support plane in a vertical or substantially vertical position so that the protruding portion 40 is arranged below towards the support plane, as illustrated in figure 7.

That is, therefore, the aforesaid method envisages arranging each module 1 in a "standing" or inclined position with respect to the vertical direction, so that the protruding portion 40 is arranged downwards, while the closed end of the container 2 (i.e., where the curve of the conduit that ideally divides the outward stretch 3a and the return stretch 3b is located) is arranged upwards.

In a first operating step of the solar collector (comprising one or more of the aforesaid modules 1 installed as just described), each module is radiated by the external light source (preferably the sun), so as to transform the light radiation into heat energy that can be stored inside the heat accumulating material 4 (possibly also heated by the electric resistance 6 supplied by the photovoltaic cells 5). During such a first step, the heat energy tends to accumulate mainly at the closed end of each module 1 present and then progress downwards until reaching the protruding portion 40.

Subsequently, in a second operating step of the solar collector, the heat accumulated at the closed end increases to such an extent that it generates the vaporisation of the vector liquid present in the conduit 3 passing at such a closed end. Thereby, the vaporised liquid vector will tend to progress through the conduit 3 (in particular the return stretch 3b) until it reaches the protruding portion 40 (more precisely, until it reaches the return stretch 3b portion of the conduit 3 passing through the protruding portion 40). At the protruding portion 40, the vaporised vector liquid will tend to condense because the protruding portion is contained inside a heat insulating casing but not inside a vacuum gap X (present at the container 2). Such condensation will result in the generation of latent heat which the protruding portion 40 is advantageously capable of absorbing to transfer it upwards (towards the closed end) through the heat accumulating material 4 present in the container 2 at the vacuum gap X.

Advantageously, therefore, the protruding portion 40 is capable of preventing the vaporised vector liquid from exiting from the solar collector until reaching the pipes connected thereto, e.g., the domestic water pipes of a flat. This also leads to the formation of pressure surges inside the pipes which could cause what are known as "water hammers" and unmanageable system temperatures.

In addition, thereby, the protruding portion 40 is also advantageously capable of exploiting the latent heat that in a standard (i.e., known in the state of the art) solar collector would be lost to the environment.

That is, the protruding portion 40 is capable of increasing the efficiency of the solar collector and reducing maintenance interventions.

Finally, in a final operating step in which the solar collector is no longer radiated from the outside (no longer accumulating heat directly), it will still be capable of heating the vector liquid circulating in the conduit 3 thanks to the exploitation of the latent heat due to the condensation process at the protruding portion 40. The protruding portion 40 is thus advantageously capable of lengthening the hysteresis time of the known solar collectors, which when not radiated tend to stop the operation thereof in a short time.

The module 1 is also advantageously configured to act as a heat energy accumulator which can be gradually released over time (even if the external light radiation is absent).

To this end, the module 1 is preferably made with tubular elements having high thicknesses, generally greater than about 1 millimetre, preferably greater than or equal to 2 millimetres, and at the same time reduced internal diameters, generally less than about 20 millimetres, so as to offer a reduced flow rate for the vector fluid (preferably water) present therein. Preferably, such tubular elements are made of stainless steel or copper.

Thereby, the module 1 is configured to operate at high pressures, generally greater than 7 bar, so as to cause an expansion of the vector fluid so as to raise the boiling temperature thereof. Consequently, limiting the expansion of the vector fluid allows to contain and accumulate the heat energy generated, which can be released later and instantaneously as the pressure of the vector liquid drops.

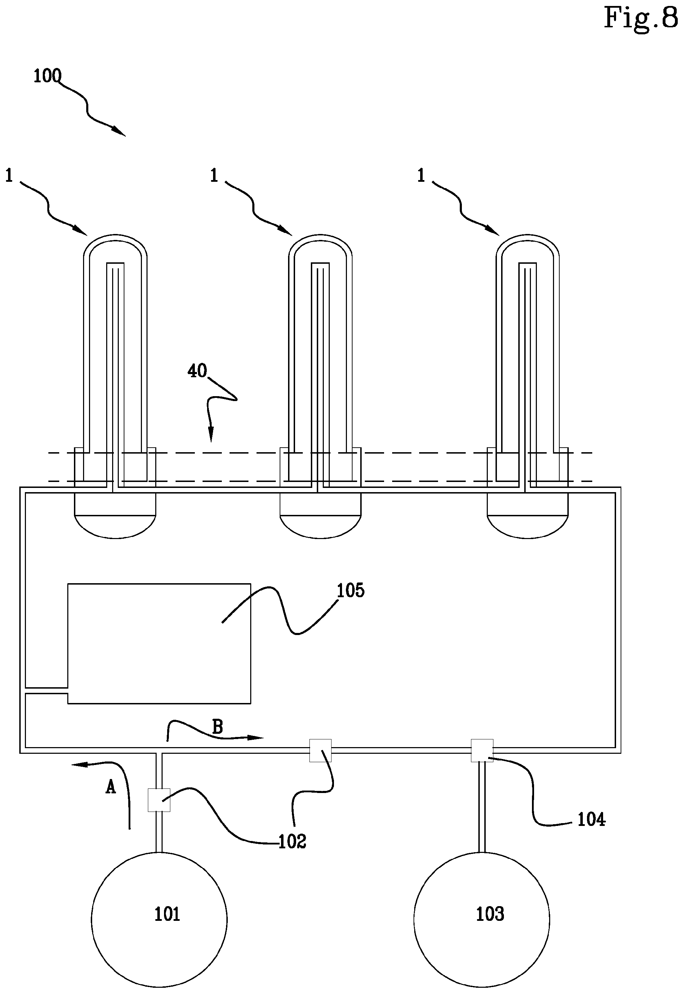

Figure 8 illustrates an embodiment example of a system 100 comprising a plurality of modules 1 of a collector. Such modules 1 are installed as described above, i.e., in a substantially vertical position in which the protruding portion 40 is arranged below, preferably on the ground. Consequently, the closed end portion where the inversion between the outward stretch 3a and the return stretch 3b occurs is arranged at the top. The system 100 shows a recirculation circuit for water (i.e., the vector fluid) from a main source 101, e.g., mains water which has an average temperature of 15 °C and a pressure of about 3 bar.

The appropriate arrangement of non-return valves 102 downstream of the main source 101 allows to generate two flows of water: a first flow directed to the collector consisting of the three modules 1 (arrow A), a second flow directed directly to the outlet area 103 (arrow B) in which, for example, apparatuses for using water such as taps or showers or integration devices such as boilers or water heaters are arranged.

The water conveyed along the arrow A is thus conveyed through the modules 1 arranged in series with each other. As mentioned above, such modules 1 can heat water either thanks to the accumulation of heat energy obtained by light radiation or through a gradual release of the previously stored heat energy and, therefore, even in the absence of light radiation from outside (e.g., at night or in cloudy weather).

The water temperature at the protruding portion 40 will be comprised between 40 °C and 70 °C. Thanks to the vertical arrangement of the modules 1, the pressures inside the circuit 100 (in which the water flows at about 3 bar to then reach values of up to 8 bar - resulting in a boiling temperature of about 175 °C) and the particular shape of the modules themselves (described above), the temperature of the water inside each module 1 will rise to a value comprised between 100 °C and 130 °C in a medial portion of the container 2 of each module 1, up to values of more than 175 °C at each closed end portion.

Subsequently, the hot water exiting the solar collector consisting of the aforesaid modules 1 is conveyed to the outlet area 103.

An appropriately configured mixer tap 104 is first arranged upstream of the outlet area 103 to mix the cold water (at approx. 15 °C) from the main source 101 (arrow B) and the hot water from the solar collector. Advantageously, such a mixer tap 104 is suitably controllable to vary the mixing and to control the temperature of the mixed water conveyed to the outlet area 103. It is thereby also possible to convey water at approximately 45 °C and 3 bar pressure to the outlet area.

Preferably, an expansion vessel 105 (preferably calibrated to about 8 bar) is interposed between the main source 101 and the modules 1 so that it can collect any vaporised water flow that is created inside the modules and which may flow up the circuit in the opposite direction relative to the water flow.

As explained above, the expansion vessel is thus capable of maintaining a reserve of water (vaporised vector fluid) advantageously capable of releasing heat energy in the future as it passes at the protruding portion 40 of the modules 1, which acts as a condenser (as explained above).

The module 1, if supplied with low mains pressures, e.g., 1 bar, and with an expansion vessel 105 calibrated at approximately 1 bar - excluding the mixing valve 104 - can also supply a certain quantity of steam useful, for example, for sterilising, cooking or for industrial processes.

## Claims

1. A module (1) of a solar collector, comprising:
- a container (2) having a vacuum gap (X) extending over a predefined length along a longitudinal axis (L) thereof and shaped to enclose a primary volume of said module (1), said container (2) being made with a material that is transparent to at least one light radiation so as to permit propagation of the light radiation from a source outside said module (1) to said primary volume;
- a conduit (3) for conveying a vector fluid arranged in said primary volume and comprising an outward stretch (3a), in which said vector fluid has a first temperature value, and a return stretch (3b), in which said vector fluid has a second temperature value that is greater than said first value;
- a heat energy accumulating material (4) interposed between said conduit (3) and said container (2) and configured at least to accumulate a set quantity of heat energy arising from said light radiation, said heat energy accumulating material (4) comprising an iron and carbon alloy;
- a light radiation absorbing element interposed between said heat energy accumulating material (4) and said container (2) and configured to absorb at least one part of the light radiation and, further, to reduce a possible dispersion due at least to the refraction phenomenon, said light radiation absorbing element being configured to convert at least part of the light radiation absorbed into a quantity of heat energy,
wherein said heat energy accumulating material (4) is configured to absorb and accumulate the quantity of heat energy deriving from the light radiation and, further, to transfer said quantity of heat energy to said conduit (3),
**characterised in that** said heat energy accumulating material (4) extends along said longitudinal axis (L) over a length greater than that of said container (2) so as to define a protruding portion (40) outside the primary volume, said protruding portion (40) being delimited by a heat insulating casing (41) in which said outward stretch (3a) and said return stretch (3b) are also immersed at least in part.

2. The module (1) according to claim 1, wherein said light radiation absorbing element comprises photovoltaic cells (5) interposed between said heat energy accumulating material (4) and said container (2) and, further, facing said container (2) to perform an operating step of conversion of the light radiation into a quantity of electric energy, said heat energy accumulating material (4) being configured to absorb a quantity of heat energy produced by said photovoltaic cells (5) during said operating step and, further, to transfer said quantity of heat energy to said conduit (3).

3. The module (1) according to claim 1, comprising photovoltaic cells (5) arranged outside said heat insulating casing (41) and preferably in contact therewith, said photovoltaic cells (5) facing the external source to perform an operating step of converting light radiation into a quantity of electric energy.

4. The module (1) according to claim 2 or 3, comprising an electric resistance (6) arranged in said primary volume opposite said heat energy accumulating material (4) relative to said conduit (3), said electric resistance (6) being connected to said photovoltaic cells (5) to receive at least part of the electric energy obtained during said operating step so as to heat the vector fluid contained in said conduit (3).

5. The module (1) according to any preceding claim, wherein said outward stretch (3a) is arranged in contact with said heat energy accumulating material (4), said heat energy accumulating material (4) being configured to convey the quantity of heat energy to said outward stretch (3a) to raise the temperature of the vector fluid from the first to the second temperature value.

6. The module (1) according to claims 1 to 4, wherein said return stretch (3b) is arranged in contact with said heat energy accumulating material (4), said heat energy accumulating material (4) being configured to convey the quantity of heat energy to said return stretch (3b) to raise the temperature of the vector fluid up to the second temperature value.

7. The module (1) according to claim 5 or 6 and claim 4, wherein said outward stretch (3a) or said return stretch (3b) is arranged facing said electric resistance (6) to absorb a quantity of heat radiated by the electric resistance (6).

8. The module (1) according to any preceding claim, wherein said heat energy accumulating material (4) is made as a single element either in granular form, or in lamellar form.

9. The module (1) according to any preceding claim, wherein said container (2) is a hollow tubular container extending along its own longitudinal axis.

10. The module (1) according to claim 9, wherein said container (2), said conduit (3) and said photovoltaic cells (5) extend concentrically parallel to said longitudinal axis.

11. The module (1) according to any preceding claim, comprising a screen (7) arranged outside said container (2) and associated therewith, said screen (7) being arranged in a first operating position in which it is opposite a source of light radiation relative to said container (2) to reflect the light radiation to said primary volume.

12. The module (1) according to claim 11, wherein said screen (7) is movable around said container (2) from said operating position at least to a covered position in which the screen (7) is interposed between said container (2) and said source of light radiation to block the propagation of at least the light radiation.

13. A method for installing a solar collector, comprising the following steps:
- providing at least one module (1) according to any one of claims 1 to 12;
- installing said at least one module (1) on a support plane in a vertical or substantially vertical position so that said protruding portion (40) is arranged below towards said support plane.

## Patentansprüche

1. Modul (1) eines Solarkollektors, umfassend:
- einen Behälter (2) mit einem Vakuumspalt (X), der sich über eine vordefinierte Länge entlang einer Längsachse (L) davon erstreckt und so geformt ist, dass er ein Primärvolumen des Moduls (1) umschließt, wobei der Behälter (2) aus einem Material hergestellt ist, das für mindestens eine Lichtstrahlung transparent ist, um die Ausbreitung der Lichtstrahlung von einer Quelle außerhalb des Moduls (1) zu dem Primärvolumen zu ermöglichen;
- eine Leitung (3) zum Fördern eines Vektorfluids, die in dem Primärvolumen angeordnet ist und ein nach außen gerichtetes Teilstück (3a), in dem das Vektorfluid einen ersten Temperaturwert aufweist, und ein Rückkehrteilstück (3b) umfasst, in dem das Vektorfluid einen zweiten Temperaturwert aufweist, der größer als der erste Wert ist;
- ein Wärmeenergie speicherndes Material (4), das zwischen der Leitung (3) und dem Behälter (2) eingefügt und zumindest dazu ausgelegt ist, eine festgelegte Menge an Wärmeenergie zu speichern, die aus der Lichtstrahlung entsteht, wobei das Wärmeenergie speichernde Material (4) eine Eisen- und Kohlenstofflegierung umfasst;
- ein Lichtstrahlung absorbierendes Element, das zwischen dem Wärmeenergie speichernden Material (4) und dem Behälter (2) eingefügt ist und ausgelegt ist, um mindestens einen Teil der Lichtstrahlung zu absorbieren und ferner eine mögliche Dispersion aufgrund mindestens des Brechungsphänomens zu reduzieren, wobei das Lichtstrahlung absorbierende Element ausgelegt ist, um mindestens einen Teil der absorbierten Lichtstrahlung in eine Menge an Wärmeenergie umzuwandeln, wobei das Wärmeenergie speichernde Material (4) ausgelegt ist, um die Menge an Wärmeenergie, die von der Lichtstrahlung herrührt, zu absorbieren und zu speichern und ferner die Menge an Wärmeenergie an die Leitung (3) zu übertragen, **dadurch gekennzeichnet, dass** sich das Wärmeenergie speichernde Material (4) entlang der Längsachse (L) über eine Länge erstreckt, die größer ist als die des Behälters (2), um einen vorspringenden Abschnitt (40) außerhalb des Primärvolumens zu definieren, wobei der vorspringende Abschnitt (40) durch ein wärmeisolierendes Gehäuse (41) begrenzt ist, in das auch das nach außen gerichtete Teilstück (3a) und das Rückkehrteilstück (3b) zumindest teilweise eingetaucht sind.

2. Modul (1) nach Anspruch 1, wobei das Lichtstrahlung absorbierende Element Photovoltaikzellen (5) umfasst, die zwischen dem Wärmeenergie speichernden Material (4) und dem Behälter (2) eingefügt sind und ferner dem Behälter (2) zugewandt sind, um einen Betriebsschritt zur Umwandlung der Lichtstrahlung in eine Menge an elektrischer Energie durchzuführen, wobei das Wärmeenergie speichernde Material (4) dazu ausgelegt ist, eine Menge an Wärmeenergie zu absorbieren, die von den Photovoltaikzellen (5) während des Betriebsschritts erzeugt wird, und ferner die Menge an Wärmeenergie an die Leitung (3) zu übertragen.

3. Modul (1) nach Anspruch 1, umfassend Photovoltaikzellen (5), die außerhalb des wärmeisolierenden Gehäuses (41) und vorzugsweise in Kontakt damit angeordnet sind, wobei die Photovoltaikzellen (5) der externen Quelle zugewandt sind, um einen Betriebsschritt zum Umwandeln von Lichtstrahlung in eine Menge elektrischer Energie durchzuführen.

4. Modul (1) nach Anspruch 2 oder 3, umfassend einen elektrischen Widerstand (6), der in dem Primärvolumen gegenüber dem Wärmeenergie speichernden Material (4) relativ zu der Leitung (3) angeordnet ist, wobei der elektrische Widerstand (6) mit den Photovoltaikzellen (5) verbunden ist, um mindestens einen Teil der während des Betriebsschritts erhaltenen elektrischen Energie aufzunehmen, um das in der Leitung (3) enthaltene Vektorfluid zu erwärmen.

5. Modul (1) nach einem der vorhergehenden Ansprüche, wobei das nach außen gerichtete Teilstück (3a) in Kontakt mit dem Wärmeenergie speichernden Material (4) angeordnet ist, wobei das Wärmeenergie speichernde Material (4) ausgelegt ist, um die Menge an Wärmeenergie zu dem nach außen gerichteten Teilstück (3a) zu befördern, um die Temperatur des Vektorfluids von dem ersten auf den zweiten Temperaturwert zu erhöhen.

6. Modul (1) nach den Ansprüchen 1 bis 4, wobei das Rückkehrteilstück (3b) in Kontakt mit dem Wärmeenergie speichernden Material (4) angeordnet ist, wobei das Wärmeenergie speichernde Material (4) ausgelegt ist, um die Menge an Wärmeenergie zu dem Rückkehrteilstück (3b) zu befördern, um die Temperatur des Vektorfluids auf den zweiten Temperaturwert zu erhöhen.

7. Modul (1) nach Anspruch 5 oder 6 und Anspruch 4, wobei das nach außen gerichtete Teilstück (3a) oder das Rückkehrteilstück (3b) dem elektrischen Widerstand (6) zugewandt angeordnet ist, um eine Menge an Wärme, die von dem elektrischen Widerstand (6) abgestrahlt wird, zu absorbieren.

8. Modul (1) nach einem der vorhergehenden Ansprüche, wobei das Wärmeenergie speichernde Material (4) als ein einzelnes Element entweder in Granulatform oder in Lamellenform hergestellt ist.

9. Modul (1) nach einem der vorhergehenden Ansprüche, wobei der Behälter (2) ein hohler rohrförmiger Behälter ist, der sich entlang seiner eigenen Längsachse erstreckt.

10. Modul (1) nach Anspruch 9, wobei sich der Behälter (2), die Leitung (3) und die Photovoltaikzellen (5) konzentrisch parallel zu der Längsachse erstrecken.

11. Modul (1) nach einem der vorhergehenden Ansprüche, umfassend einen Schirm (7), der außerhalb des Behälters (2) angeordnet und mit diesem assoziiert ist, wobei der Schirm (7) in einer ersten Betriebsposition angeordnet ist, in der er einer Lichtstrahlungsquelle relativ zu dem Behälter (2) gegenüberliegt, um die Lichtstrahlung zu dem Primärvolumen zu reflektieren.

12. Modul (1) nach Anspruch 11, wobei der Schirm (7) um den Behälter (2) aus der Betriebsposition zumindest in eine abgedeckte Position bewegbar ist, in der der Schirm (7) zwischen dem Behälter (2) und der Lichtstrahlungsquelle eingefügt ist, um die Ausbreitung zumindest der Lichtstrahlung zu blockieren.

13. Verfahren zum Installieren eines Solarkollektors, umfassend die folgenden Schritte:
- Bereitstellen mindestens eines Moduls (1) nach einem der Ansprüche 1 bis 12;
- Installieren des mindestens einen Moduls (1) auf einer Stützebene in einer vertikalen oder im Wesentlichen vertikalen Position, so dass der vorspringende Abschnitt (40) unten in Richtung der Stützebene angeordnet ist.

## Revendications

1. Module (1) d'un capteur solaire, comprenant :
- un récipient (2) comportant un espace sous vide (X) s'étendant sur une longueur prédéfinie le long de son axe longitudinal (L) et façonné de manière à entourer un volume principal dudit module (1), ledit récipient (2) étant réalisé dans un matériau étant transparent à au moins un rayonnement lumineux de manière à permettre la propagation du rayonnement lumineux à partir d'une source située à l'extérieur dudit module (1) vers ledit volume principal ;
- un conduit (3), destiné à acheminer un fluide vecteur, disposé dans ledit volume principal et comprenant un tronçon vers l'extérieur (3a), dans lequel ledit fluide vecteur possède une première valeur de température, et un tronçon de retour (3b), dans lequel ledit fluide vecteur possède une seconde valeur de température supérieure à ladite première valeur ;
- un matériau accumulateur d'énergie thermique (4) interposé entre ledit conduit (3) et ledit récipient (2) et configuré au moins pour accumuler une quantité déterminée d'énergie thermique provenant dudit rayonnement lumineux, ledit matériau accumulateur d'énergie thermique (4) comprenant un alliage de fer et de carbone ;
- un élément d'absorption de rayonnement lumineux interposé entre ledit matériau accumulateur d'énergie thermique (4) et ledit récipient (2) et configuré pour absorber au moins une partie du rayonnement lumineux et, en outre, pour réduire une dispersion éventuelle due au moins au phénomène de réfraction, ledit élément d'absorption de rayonnement lumineux étant configuré pour convertir au moins une partie du rayonnement lumineux absorbé en une quantité d'énergie thermique, dans lequel ledit matériau accumulateur d'énergie thermique (4) est configuré pour absorber et accumuler la quantité d'énergie thermique provenant du rayonnement lumineux et, en outre, pour transférer ladite quantité d'énergie thermique vers ledit conduit (3),
**caractérisé en ce que** ledit matériau accumulateur d'énergie thermique (4) s'étend le long dudit axe longitudinal (L) sur une longueur supérieure à celle dudit récipient (2) de manière à définir une partie en saillie (40) à l'extérieur du volume principal, ladite partie en saillie (40) étant délimitée par un boîtier d'isolation thermique (41) dans lequel ledit tronçon vers l'extérieur (3a) et ledit tronçon de retour (3b) sont également immergés au moins en partie.

2. Module (1) selon la revendication 1, dans lequel ledit élément d'absorption de rayonnement lumineux comprend des cellules photovoltaïques (5) interposées entre ledit matériau d'accumulation d'énergie thermique (4) et ledit récipient (2) et, en outre, faisant face audit récipient (2) pour effectuer une étape de fonctionnement de conversion du rayonnement lumineux en une quantité d'énergie électrique, ledit matériau d'accumulation d'énergie thermique (4) étant configuré pour absorber une quantité d'énergie thermique produite par lesdites cellules photovoltaïques (5) au cours de ladite étape de fonctionnement et, en outre, pour transférer ladite quantité d'énergie thermique audit conduit (3).

3. Module (1) selon la revendication 1, comprenant des cellules photovoltaïques (5) disposées à l'extérieur dudit boîtier d'isolation thermique (41) et de préférence en contact avec celui-ci, lesdites cellules photovoltaïques (5) faisant face à la source externe pour effectuer une étape de fonctionnement consistant à convertir le rayonnement lumineux en une quantité d'énergie électrique.

4. Module (1) selon la revendication 2 ou 3, comprenant une résistance électrique (6) disposée dans ledit volume principal à l'opposé dudit matériau d'accumulation d'énergie thermique (4) par rapport audit conduit (3), ladite résistance électrique (6) étant reliée auxdites cellules photovoltaïques (5) pour recevoir au moins une partie de l'énergie électrique obtenue au cours de ladite étape de fonctionnement de manière à chauffer le fluide vecteur contenu dans ledit conduit (3).

5. Module (1) selon l'une quelconque des revendications précédentes, dans lequel ledit tronçon vers l'extérieur (3a) est disposé en contact avec ledit matériau accumulateur d'énergie thermique (4), ledit matériau accumulateur d'énergie thermique (4) étant configuré pour acheminer la quantité d'énergie thermique audit tronçon vers l'extérieur (3a) afin d'élever la température du fluide vecteur de la première à la seconde valeur de température.

6. Module (1) selon les revendications 1 à 4, dans lequel ledit tronçon de retour (3b) est disposé en contact avec ledit matériau accumulateur d'énergie thermique (4), ledit matériau accumulateur d'énergie thermique (4) étant configuré pour acheminer la quantité d'énergie thermique audit tronçon de retour (3b) afin d'élever la température du fluide vecteur jusqu'à la seconde valeur de température.

7. Module (1) selon la revendication 5 ou 6 et la revendication 4, dans lequel ledit tronçon vers l'extérieur (3a) ou ledit tronçon de retour (3b) est disposé en face de ladite résistance électrique (6) pour absorber une quantité de chaleur rayonnée par la résistance électrique (6).

8. Module (1) selon l'une quelconque des revendications précédentes, dans lequel ledit matériau accumulateur d'énergie thermique (4) est réalisé sous la forme d'un seul élément, soit sous forme granulaire, soit sous forme lamellaire.

9. Module (1) selon l'une quelconque des revendications précédentes, dans lequel ledit récipient (2) est un récipient tubulaire creux s'étendant le long de son propre axe longitudinal.

10. Module (1) selon la revendication 9, dans lequel ledit récipient (2), ledit conduit (3) et lesdites cellules photovoltaïques (5) s'étendent de manière concentrique et parallèlement audit axe longitudinal.

11. Module (1) selon l'une quelconque des revendications précédentes, comprenant un écran (7) disposé à l'extérieur dudit récipient (2) et associé à celui-ci, ledit écran (7) étant disposé dans une première position de fonctionnement dans laquelle il est opposé à une source de rayonnement lumineux par rapport audit récipient (2) afin de réfléchir le rayonnement lumineux vers ledit volume principal.

12. Module (1) selon la revendication 11, dans lequel ledit écran (7) est mobile autour dudit récipient (2) de ladite position de fonctionnement au moins jusqu'à une position recouverte dans laquelle l'écran (7) est interposé entre ledit récipient (2) et ladite source de rayonnement lumineux pour empêcher la propagation au moins du rayonnement lumineux.

13. Procédé d'installation d'un capteur solaire, comprenant les étapes suivantes :
- fournir au moins un module (1) selon l'une quelconque des revendications 1 à 12 ;
- installer ledit au moins un module (1) sur un plan de support dans une position verticale ou sensiblement verticale de sorte que ladite partie en saillie (40) soit disposée vers le bas vers ledit plan de support.
